(19) Europäisches Patentamt
European Patent Office
Office européen des brevets

(11) **EP 4 451 361 A1**

(12) **EUROPEAN PATENT APPLICATION**
published in accordance with Art. 153(4) EPC


(43) Date of publication:
**23.10.2024 Bulletin 2024/43**

(21) Application number: **21967618.6**

(22) Date of filing: **15.12.2021**

(51) International Patent Classification (IPC):
***H01M 4/131*** *(2010.01)* ***H01M 4/50*** *(2010.01)*
***H01M 10/0525*** *(2010.01)*

(52) Cooperative Patent Classification (CPC):
**H01M 4/02; H01M 4/13; H01M 4/131; H01M 4/36; H01M 4/485; H01M 4/50; H01M 4/505; H01M 4/587; H01M 10/052; H01M 10/0525; H01M 10/0567; H01M 10/0568;** Y02E 60/10

(86) International application number:
**PCT/CN2021/138349**

(87) International publication number:
**WO 2023/108481 (22.06.2023 Gazette 2023/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Ningde Amperex Technology Limited**
**Ningde, Fujian 352100 (CN)**

(72) Inventor: **YUAN, Guoxia**
**Ningde, Fujian 352100 (CN)**

(74) Representative: **Klunker IP Patentanwälte PartG mbB**
**Destouchesstraße 68**
**80796 München (DE)**


# (54) ELECTROCHEMICAL APPARATUS AND ELECTRONIC APPARATUS


(57) This application provides an electrochemical apparatus and an electronic apparatus. The electrochemical apparatus includes a positive electrode plate, where the positive electrode plate includes a positive electrode material layer, the positive electrode material layer includes a positive electrode active material, and in a cross-sectional scanning electron microscope image of the positive electrode material layer, a minimum circumscribed circle radius of the profile of a positive electrode active material particle with an area greater than 5 $\mu m^2$ is $R_c$, and a maximum inscribed circle radius of the profile of the positive electrode active material particle with an area greater than 5 $\mu m^2$ is $R_i$, satisfying 1 < average value of $R_c/R_i \leq 3$. According to the electrochemical apparatus provided in this application, the positive electrode active material in the positive electrode material layer satisfies 1 < average value of $R_c/R_i \leq 3$, so that transmission efficiency of lithium ions can be effectively increased, thereby improving rate performance of the electrochemical apparatus at room temperature and low temperature.


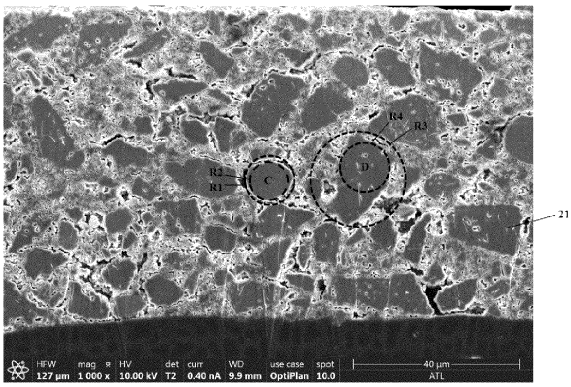


FIG. 1

EP 4 451 361 A1

## Description

### TECHNICAL FIELD

This application relates to the electrochemical field, and in particular, to an electrochemical apparatus and an electronic apparatus.

### BACKGROUND

Due to advantages such as high energy density, long cycle life, and zero memory effect, lithium-ion batteries are widely used in fields such as wearable devices, smart phones, drones, electric vehicles, and large-scale energy storage devices and have become a new type of green chemical power source with the greatest development potential in the world today. However, with wide application of the lithium-ion batteries, the market imposes higher requirements on overall performance of the lithium-ion batteries.

The positive electrode active materials, negative electrode active materials, and electrolytes in the lithium-ion batteries are important parameters that affect performance of the lithium-ion batteries. The positive electrode active material used will affect transmission efficiency of lithium ions, thereby affecting electrochemical performance, such as rate performance, of electrochemical apparatuses. However, existing positive electrode active materials need to be further optimized to improve the rate performance of the electrochemical apparatuses.

### SUMMARY

This application is intended to provide an electrochemical apparatus and an electronic apparatus to improve rate performance of the electrochemical apparatus at low temperature and room temperature.

A first aspect of this application provides an electrochemical apparatus, including a positive electrode plate, where the positive electrode plate includes a positive electrode material layer, the positive electrode material layer includes a positive electrode active material, and in a cross-sectional scanning electron microscope image of the positive electrode material layer, a minimum circumscribed circle radius of the profile of a positive electrode active material particle with an area greater than 5 $\mu m^2$ is $R_c$, and a maximum inscribed circle radius of the profile of the positive electrode active material particle with an area greater than 5 $\mu m^2$ is $R_i$, satisfying 1 < average value of $R_c/R_i \le 3$. For example, the average value of $R_c/R_i$ may be 1.1, 1.5, 1.8, 2, 2.3, 2.5, 2.8, 3, or in a range defined by any two of these values. Without being limited to any theory, according to the electrochemical apparatus provided in this application, the positive electrode active material in the positive electrode material layer satisfies 1 < average value of $R_c/R_i \le 3$, so that transmission efficiency of lithium ions during charging and discharging can be effectively increased, thereby improving rate performance of the electrochemical apparatus at room temperature and low temperature (for example, at a temperature of less than or equal to 0°C). A possible reason is that the profile of a positive electrode material layer with the average value of $R_c/R_i$ within the foregoing range enables the positive electrode active material to maintain a stable crystal structure during high rate cycling, effectively improves kinetic performance of intercalation and deintercalation of lithium ions of the positive electrode active material, and provides good transmission performance of the lithium ions, thereby improving the rate performance of the electrochemical apparatus. In this application, a cross section of the positive electrode material layer is obtained by cutting transversely along a thickness direction of the positive electrode material layer.

In some embodiments of this application, the positive electrode active material particles with an area greater than 5 $\mu m^2$ include first particles and second particles, a minimum circumscribed circle radius of the profile of the first particle is $R_{c1}$, and a maximum inscribed circle radius of the profile of the first particle is $R_{i1}$, satisfying 1 < average value of $R_{c1}/R_{i1} \le 1.5$; and a minimum circumscribed circle radius of the profile of the second particle is $R_{c2}$, and a maximum inscribed circle radius of the profile of the second particle is $R_{i2}$, satisfying 1.5 < average value of $R_{c2}/R_{i2} \le 3$.

Based on a cross-sectional area of the positive electrode material layer, an area percentage of the first particles is greater than 0% and less than or equal to 50%, and an area percentage B of the second particles ranges from 30% to 80%. For example, the average value of $R_{c1}/R_{i1}$ may be 1.1, 1.2, 1.3, 1.4, 1.5, or in a range defined by any two of these values; the average value of $R_{c2}/R_{i2}$ may be 1.6, 2, 2.5, 3, or in a range defined by any two of these values; the area percentage of the first particles may be 1%, 5%, 10%, 15%, 20%, 25%, 30%, 35%, 40%, 45%, 50%, or in a range defined by any two of these values; and the area percentage B of the second particles may be 30%, 35%, 40%, 45%, 50%, 55%, 60%, 65%, 70%, 75%, 80%, or in a range defined by any two of these values.

The first particles and the second particles are distributed in the positive electrode material layer at the foregoing ratios. After compacting, particles with different values of $R_c/R_i$ in the positive electrode material layer are staggered, which improves a distribution network of the positive electrode active material and a conductive agent, thereby effectively reducing interface side reactions in the positive electrode material layer, increasing transmission efficiency of lithium ions, improving electronic conductivity inside the positive electrode plate, and effectively improving rate performance and

cycling performance of the electrochemical apparatus. When the area percentage B of the second particles is excessively low (for example, less than 30%), the area percentage of the first particles is excessively high, and compacted density of the positive electrode plate is reduced, which affects the transmission efficiency of the lithium ions; and when the area percentage B of the second particles is excessively high (for example, greater than 80%), compacted density of the positive electrode plate is also reduced, which affects transmission efficiency of the lithium ions, thereby affecting the rate performance of the electrochemical apparatus at room temperature and low temperature. The area percentages of the first particles and the second particles being controlled within the ranges in this application helps improve the rate performance of the electrochemical apparatus at room temperature and low temperature. In this application, the compacted density of the positive electrode plate is compacted density of the positive electrode material layer in the positive electrode plate.

In some embodiments of this application, an average cross-sectional area of the first particles is less than an average cross-sectional area of the second particles, which helps shorten a transmission path of the lithium ions and improve the rate performance of the electrochemical apparatus.

In some embodiments of this application, the electrochemical apparatus satisfies at least one of conditions (a) and (b): (a) The positive electrode active material includes lithium manganate, and the lithium manganate includes element-doped lithium manganate and/or lithium manganate containing a coating layer. A doping element in the element-doped lithium manganate is not particularly limited in this application, provided that the objectives of this application can be achieved. For example, the doping element may include but is not limited to at least one of Al, Nb, Mg, Ti, F, B, Zr, W, Sr, Y, Ce, or La. For the lithium manganate containing a coating layer, an element in the coating layer is not particularly limited in this application, provided that the objectives of this application can be achieved. For example, the element in the coating layer may include but is not limited to at least one of Al, Sr, Zr, Ti, or B. (b) The positive electrode active material includes a composite metal oxide of element lithium and transition metal elements, where the transition metal elements include Mn and metal element M1, and metal element M1 includes at least one of Ni, Co, or Fe. Based on mass of the positive electrode active material, a mass percentage of Mn ranges from 30% to 65%, and a mass percentage of metal element M1 ranges from 2% to 25%. The electrochemical apparatus satisfies at least one of conditions (a) and (b), helping improve cycling performance and rate performance at low temperature of the electrochemical apparatus.

In some embodiments of this application, the second particles include metal element M2, and metal element M2 includes at least one of Al, Mg, or Nb.

In some embodiments of this application, based on mass of the second particles, a mass percentage of metal element M2 ranges from 0.1% to 3%. For example, the mass percentage of metal element M2 may be 0.1%, 0.3%, 0.5%, 0.8%, 1%, 1.3%, 1.5%, 1.8%, 2%, 2.5%, 3%, or in a range defined by any two of these values.

In the related art, positive electrode active materials containing manganese (for example, lithium manganate) are widely used in electrochemical apparatuses, such as lithium-ion batteries. However, $Mn^{3+}$ in lithium manganate is prone to disproportionation, which causes manganese ($Mn^{2+}$) to dissolve and then migrate to a negative electrode through an electrolyte to damage a solid electrolyte interface (SEI) film on the negative electrode. Repairing of the SEI film causes loss of active lithium, thereby affecting cycling performance and rate performance of the lithium-ion battery. In this application, the negative electrode may be a negative electrode plate.

The inventors of this application have found that for the electrochemical apparatus including the manganese-containing positive electrode active material, when the positive electrode active material includes metal element M1, the use of metal element M1 helps alleviate the dissolution of manganese, so as to reduce damage to the SEI film on the negative electrode and the loss of the active lithium caused by consumption of lithium for repairing the SEI film, thereby improving the cycling performance and rate performance of the electrochemical apparatus.

The inventors of this application have found that when the second particles include metal element M2, the use of metal element M2 can reduce interface side reactions between the second particles and the electrolyte during charging and discharging at low temperature, thereby reducing internal resistance of the positive electrode plate and improving rate performance of the electrochemical apparatus at low temperature.

The inventors of this application have found that when the mass percentage of metal element M2 is excessively low (for example, less than 0.1%), the side reactions between the second particles and the electrolyte cannot be significantly reduced. When the mass percentage of metal element M2 is excessively high (for example, greater than 3%), the side reactions between the second particles and the electrolyte cannot be further reduced, and capacity per gram of the positive electrode active material is reduced. The mass percentage of metal element M2 being controlled within the foregoing range helps reduce the interface side reactions between the second particles and the electrolyte and improve the cycling performance of the electrochemical apparatus. In this application, the negative electrode may be a negative electrode plate.

In some embodiments of this application, particle size distribution by volume of the positive electrode active material satisfies at least one of conditions (c) and (d): (c) $9\ \mu m \leq D_v50 \leq 22\ \mu m$; and (d) $0.9 \leq (D_v90 - D_v10)/D_v50 \leq 2$. For example, $D_v50$ of the positive electrode active material may be 9 μm, 10 μm, 11 μm, 12 μm, 13 μm, 14 μm, 15 μm, 16 μm 17 μm, 18 μm, 19 μm, 20 μm, 21 μm, 22 μm, or in a range defined by any two of these values. For example, a value of $(D_v90 - D_v10)/D_v50$ may be 0.9, 1, 1.1, 1.2, 1.3, 1.4, 1.5, 1.6, 1.7, 1.8, 1.9, 2, or in a range defined by any two of these values. The

particle size distribution by volume of the positive electrode active material being controlled to satisfy at least one of conditions (c) and (d) helps improve the rate performance of the electrochemical apparatus at room temperature and low temperature. $D_v90$ and $D_v10$ of the positive electrode active material are not particularly limited in this application, provided that the value of $(D_v90 - D_v10)/D_v50$ is within the foregoing range. For example, $D_v90$ of the positive electrode active material ranges from 15 μm to 40 μm, and $D_v10$ of the positive electrode active material ranges from 0.5 μm to 6 μm. The value of $(D_v90 - D_v10)/D_v50$ mainly reflects the particle size distribution of the positive electrode active material.

In some embodiments of this application, the electrochemical apparatus further includes an electrolyte, the electrolyte includes linear carbonate and cyclic carbonate, and based on mass of the electrolyte, a mass percentage of the linear carbonate is $\omega_1$, and a mass percentage $\omega_2$ of the cyclic carbonate ranges from 25% to 50%, satisfying that $\omega_1/\omega_2$ ranges from 0.75 to 2.5. For example, the mass percentage $\omega_2$ of the cyclic carbonate may be 25%, 30%, 35%, 40%, 45%, 50%, or in a range defined by any two of these values; and a value of $\omega_1/\omega_2$ may be 0.75, 1, 1.25, 1.5, 1.75, 2, 2.25, 2.5, or in a range defined by any two of these values.

Without being limited to any theory, when the average value of $R_c/R_i$ in the positive electrode active material is controlled, and the electrolyte includes linear carbonate and cyclic carbonate, a synergistic effect can be generated between the positive electrode active material and the electrolyte, which can shorten a transmission path of lithium ions and especially increase transmission efficiency of lithium ions on an interface between the positive electrode active material and the electrolyte, thereby improving the rate performance of the electrochemical apparatus.

Without being limited to any theory, when the mass percentage $\omega_2$ of the cyclic carbonate is excessively low (for example, less than 25%), a good synergistic effect cannot be generated between the cyclic carbonate and the linear carbonate to increase the transmission efficiency of the lithium ions. When the mass percentage $\omega_2$ of the cyclic carbonate is excessively high (for example, greater than 50%), viscosity of the electrolyte is increased, which is not conducive to transmission of the lithium ions and affects the rate performance of the electrochemical apparatus. When the value of $\omega_1/\omega_2$ is less than 0.75 or greater than 2.5, a synergistic effect between the cyclic carbonate and the linear carbonate is affected, thereby affecting the transmission efficiency of the lithium ions. The mass percentage $\omega_2$ of the cyclic carbonate and the value of $\omega_1/\omega_2$ being controlled within the ranges in this application allows the positive electrode active material to be fully infiltrated, thereby increasing the transmission efficiency of the lithium ions on the interface between the positive electrode active material and the electrolyte and improving the rate performance of the electrochemical apparatus.

In some embodiments of this application, $35\% \leq \omega_1 \leq 65\%$. For example, the mass percentage $\omega_1$ of the linear carbonate may be 35%, 40%, 45%, 50%, 55%, 60%, 65%, or in a range defined by any two of these values. Without being limited to any theory, the mass percentage $\omega_1$ of the linear carbonate being controlled within the range in this application helps generate a good synergistic effect between the cyclic carbonate and the linear carbonate to increase the transmission efficiency of the lithium ions, thereby improving the rate performance of the electrochemical apparatus.

In some embodiments of this application, the linear carbonate includes at least one of dimethyl carbonate (DMC), diethyl carbonate (DEC), ethyl methyl carbonate (EMC), ethyl propyl carbonate (EPC), dipropyl carbonate (DPC), methyl isopropyl carbonate, methyl butyl carbonate, or dibutyl carbonate (DBC). Without being limited to any theory, the use of the linear carbonate helps increase the transmission efficiency of the lithium ions, thereby improving the rate performance of the electrochemical apparatus.

In some embodiments of this application, the cyclic carbonate includes at least one of ethylene carbonate (EC), propylene carbonate (PC), or butylene carbonate (BC). Without being limited to any theory, the use of the cyclic carbonate helps increase the transmission efficiency of the lithium ions, thereby improving the rate performance of the electrochemical apparatus.

In some embodiments of this application, the electrolyte includes a sulfonate compound, and based on mass of the electrolyte, a mass percentage of the sulfonate compound is A, satisfying $0.006 \leq A/B \leq 0.1$. For example, a value of A/B may be 0.006, 0.008, 0.01, 0.02, 0.04, 0.06, 0.08, 0.1, or in a range defined by any two of these values. Without being limited to any theory, sulfur-oxygen double bonds in the sulfonate compound helps improve stability of an SEI film and reduce deposition of dissolved manganese on a negative electrode, thereby improving the cycling performance of the electrochemical apparatus. In addition, the value of A/B being within the range in this application helps generate a synergistic effect between the sulfonate compound and the positive electrode active material, which improves the stability of the SEI film and increases the transmission efficiency of the lithium ions, thereby further improving the rate performance of the electrochemical apparatus.

In some embodiments of this application, $0.5\% \leq A \leq 10\%$. For example, the mass percentage A of the sulfonate compound may be 0.5%, 1%, 2%, 3%, 4%, 5%, 6%, 7%, 8%, 9%, 10%, or in a range defined by any two of these values. Without being limited to any theory, when the mass percentage A of the sulfonate compound is excessively low (for example, less than 0.5%), the stability of the SEI film is insignificantly improved. When the mass percentage A of the sulfonate compound is excessively high (for example, greater than 10%), an excessively thick or compact SEI film is formed, which hinders transmission of the lithium ions, thereby causing decreased rate performance of the electrochemical apparatus.

Preferably, the sulfonate compound includes at least one of the following structural compounds I-1 to I-14. The

use of the sulfonate compound with the following structures helps improve the stability of the SEI film and reduce the deposition of the leached manganese on the negative electrode, thereby improving the cycling performance of the electrochemical apparatus.

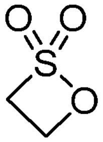
I-1

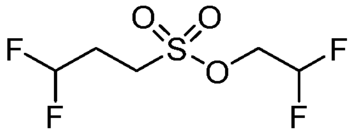
I-2

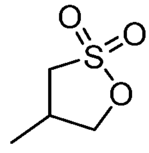
I-3

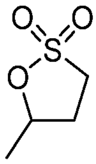
I-4

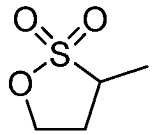
I-5

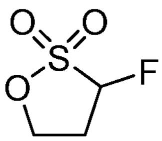
I-6

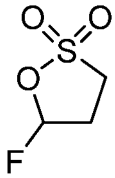
I-7

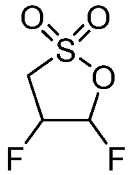
I-8

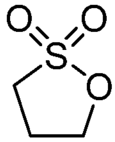
I-9

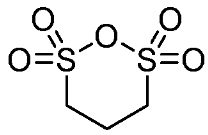
I-10

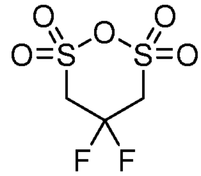
I-11

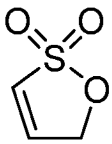
I-12

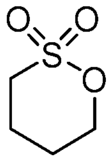
I-13

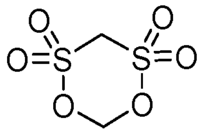
I-14

In some embodiments of this application, the electrochemical apparatus further includes a negative electrode plate, where the negative electrode plate includes a negative electrode material layer, the negative electrode material layer includes a negative electrode active material, and the negative electrode active material includes at least one of artificial graphite, natural graphite, or hard carbon. Without being limited to any theory, the use of the foregoing negative electrode active material helps generate a synergistic effect between the negative electrode active material and the foregoing positive electrode active material and/or an electrolyte to improve cycling performance and rate performance of the electrochemical apparatus.

In this application, the positive electrode active material may include but is not limited to a composite oxide and/or at least one of sulfide, selenide, or halide of the composite oxide. The composite oxide may include but is not limited to at least one of $LiMn_2O_4$, $Li(Ni_{a1}Co_{b1}Mn_{c1})O_2$ ($0 < a1 < 1$, $0 < b1 < 1$, $0 < c1 < 1$, $a1 + b1 + c1 = 1$), $LiNi_{1-y1}Co_{y1}O_2$ ($0 < y1 < 1$), $LiNi_{2-y3}Mn_{y3}O_4$ ($0 < y3 < 2$), $Li(Ni_{a3}Co_{b3}Al_{c3})O_2$ ($0 < a3 < 1$, $0 < b3 < 1$, $0 < c3 < 1$, $a3 + b3 + c3 = 1$), $LiMn_pFe_qPO_4$ ($0 < p < 1$, $0 < q < 1$, $p + q = 1$), or $LiFePO_4$.

Optionally, an amorphous compound or a crystalline compound may further be present on a surface of the composite oxide, and the amorphous or crystalline compound may include but is not limited to at least one of oxide of element Z, hydroxide of element Z, oxyhydroxide of element Z, oxycarbonate of element Z, or basic carbonate of element Z. Element Z may include but is not limited to at least one of Mg, Al, Co, K, Na, Ca, Si, Ti, V, Sn, Ge, Ga, B, As, or Zr.

A preparation method of the composite oxide with an amorphous compound or a crystalline compound on the surface is not particularly limited in this application, provided that the objectives of this application can be achieved. For example, spraying or dipping may be used.

In this application, the positive electrode material layer may further include a conductive agent. The conductive agent is not particularly limited in this application, provided that the objectives of this application can be achieved. For example, the conductive agent may include but is not limited to at least one of conductive carbon black (Super P), carbon nanotubes (CNTs), carbon fibers, Ketjen black, graphene, metal material, or conductive polymer. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fibers, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. In this application, based on mass of the positive electrode material layer, a mass percentage of the conductive agent ranges from 0.5% to 5%.

In this application, the positive electrode material layer may further include a positive electrode binder. The

positive electrode binder is not particularly limited in this application, provided that the objectives of this application can be achieved. For example, the positive electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide containing polymer, polyvinylpyrrolidone, polyurethane, polytetrafluoroethylene, polyvinylidene fluoride, polyethylene, polypropylene, styrene-butadiene rubber, acrylic styrene-butadiene rubber, epoxy resin, or nylon.

In this application, the positive electrode plate includes a positive electrode current collector. The positive electrode current collector is not particularly limited, provided that the objectives of this application can be achieved. For example, the positive electrode current collector may include but is not limited to aluminum foil, aluminum alloy foil, or a composite current collector. In this application, thickness of the positive electrode current collector is not particularly limited, provided that the objectives of this application can be achieved. For example, the thickness ranges from 8 μm to 20 μm.

Optionally, the positive electrode plate may further include a conductive layer, and the conductive layer is located between the positive electrode current collector and the positive electrode material layer. Composition of the conductive layer is not particularly limited in this application, and the conductive layer may be a conductive layer commonly used in the art, for example, may include but is not limited to the foregoing conductive agent and the foregoing positive electrode binder.

In this application, the negative electrode material layer may further include a conductive agent. The conductive agent is not particularly limited in this application, provided that the objectives of this application can be achieved. For example, the conductive agent may include but is not limited to at least one of the foregoing conductive agents.

In this application, the negative electrode material layer may further include a negative electrode binder. The negative electrode binder is not particularly limited in this application, provided that the objectives of this application can be achieved. For example, the negative electrode binder may include but is not limited to at least one of difluoroethylene-hexafluoropropylene copolymer, polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, ethylene oxide containing polymer, polyvinylpyrrolidone, polyurethane, polytetrafluoroethylene, polyethylene, polypropylene, styrene-butadiene rubber, acrylic styrene-butadiene rubber, epoxy resin, or nylon.

In this application, the negative electrode plate includes a negative electrode current collector. The negative electrode current collector is not particularly limited, provided that the objectives of this application can be achieved. For example, the negative electrode current collector may include but is not limited to copper foil, copper alloy foil, nickel foil, stainless steel foil, titanium foil, foamy nickel, foamy copper, or a composite current collector. In this application, thickness of the negative electrode current collector is not particularly limited, provided that the objectives of this application can be achieved. For example, the thickness ranges from 4 μm to 12 μm.

Optionally, the negative electrode plate may further include a conductive layer, and the conductive layer is located between the negative electrode current collector and the negative electrode material layer. Composition of the conductive layer is not particularly limited in this application, and the conductive layer may be a conductive layer commonly used in the art, for example, may include but is not limited to the foregoing conductive agent and the foregoing negative electrode binder.

In this application, the electrolyte may further include a non-aqueous solvent. The non-aqueous solvent is not particularly limited in this application, provided that the objectives of this application can be achieved. For example, the non-aqueous solvent may include but is not limited to at least one of a carboxylic ester compound, an ether compound, or another organic solvent. The carboxylic ester compound may include but is not limited to at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, 2,2-difluoroethyl acetate, valerolactone, butyrolactone, 2-fluoroethyl acetate, 2,2-ethyl difluoroacetate, ethyl trifluoroacetate, ethyl 2,2,3,3,3-pentafluoropropionate, 2,2,3,3,4,4,4-heptafluorobutyric acid methyl ester, 4,4,4-trifluoro-3-(trifluoromethyl) butyric acid methyl ester, 2,2,3,3,4,4, 5, 5, 5, 5-nonafluorovalerate ethyl ester, 2,2,3,3,4,4,5,5,6,6,7,7,8,8,9,9,9-heptadecafluoromethylnonanoate, or 2,2,3,3,4,4,5,5,6,6,7,7,8,8,9,9,9-ethyl heptafluorononanoate. The ether compound may include but is not limited to at least one of ethylene glycol dimethyl ether, diethylene glycol dimethyl ether, tetraethylene glycol dimethyl ether, dibutyl ether, tetrahydrofuran, 2-methyltetrahydrofuran, or bis(2,2,2-trifluoroethyl) ether. The another organic solvent may include but is not limited to at least one of ethyl vinyl sulfone, methyl isopropyl sulfone, isopropyl sec butyl sulfone, dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester.

In this application, the electrolyte may further include a lithium salt. The lithium salt is not particularly limited in this application, provided that the objectives of this application can be achieved. For example, the lithium salt may include but is not limited to at least one of lithium hexafluorophosphate ($LiPF_6$), lithium tetrafluoroborate ($LiBF_4$), lithium bis(oxalato) borate ($LiB(C_2O_4)_2$), lithium difluoro(oxalato)borate ($LiBF_2(C_2O_4)$), lithium hexafluoroantimonate ($LiSbF_6$), lithium perfluorobutanesulfonate ($LiC_4F_9SO_3$), lithium perchlorate ($LiClO_4$), lithium aluminate ($LiAlO_2$), lithium tetrachloroaluminate

($LiAlCl_4$), lithium bissulfonimide ($LiN(C_xF_{2x+1}SO_2)(C_yF_{2y+1}SO_2)$, where x and y are natural numbers less than or equal to 4), lithium chloride (LiCl), or lithium fluoride (LiF). Preferably, the lithium salt includes $LiPF_6$. Concentration of the lithium salt is not particularly limited in this application, provided that the objectives of this application can be achieved. For example, the concentration ranges from 0.5 mol/L to 3 mol/L, preferably from 0.5 mol/L to 2 mol/L, and further preferably from 0.6 mol/L to 1.5 mol/L.

The electrochemical apparatus in this application further includes a separator, and the separator is not particularly limited in this application, provided that the objectives of this application can be achieved. For example, the separator may include but is not limited to at least one of a polyethylene (PE), polypropylene (PP), and polytetrafluoroethylene-based polyolefin (PO) separator, a polyester film (for example, a polyethylene terephthalate (PET) film), a cellulose film, a polyimide film (PI), a polyamide film (PA), a spandex, an aramid film, a woven film, a non-woven film (non-woven fabric), a microporous film, a composite film, a separator paper, a laminated film, or a spinning film. The separator in this application may have a porous structure, and a pore diameter is not particularly limited, provided that the objectives of this application can be achieved. For example, the pore diameter may range from 0.01 μm to 1 μm. In this application, thickness of the separator is not particularly limited, provided that the objectives of this application can be achieved. For example, the thickness may range from 5 μm to 500 μm.

For example, the separator may include a separator substrate layer and a surface treatment layer. The separator substrate layer may be a non-woven fabric, film, or composite film of a porous structure, and a material of the separator substrate layer may include but is not limited to at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the separator substrate layer, and the surface treatment layer may be a polymer layer or an inorganic material layer, or a layer formed by a polymer and an inorganic material.

The polymer layer includes a polymer, and a material of the polymer may include but is not limited to at least one of vinylidene fluoride, vinylidene fluoride-hexafluoropropylene copolymer, polyacrylonitrile, polyimide, acrylonitrile-butadiene copolymer, acrylonitrile-styrene-butadiene copolymer, polymethyl methacrylate, polymethyl acrylate, polyethyl acrylate, acrylic acid-styrene copolymer, polydimethylsiloxane, polyacrylic acid sodium, or carboxymethyl cellulose. The inorganic material layer may include but is not limited to inorganic particles and an inorganic material layer binder, and the inorganic particles are not particularly limited in this application, for example, may include but are not limited to at least one of ceramics, aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic material layer binder is not particularly limited in this application, for example, may include but is not limited to at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene.

The electrochemical apparatus in this application is not particularly limited, and may include any apparatus in which an electrochemical reaction occurs. In some embodiments, the electrochemical apparatus may include but is not limited to a lithium metal secondary battery, a lithium-ion secondary battery (lithium-ion battery), a lithium polymer secondary battery, or a lithium-ion polymer secondary battery.

A preparation process of electrochemical apparatus is well known to persons skilled in the art, and is not particularly limited in this application. For example, the preparation process may include but is not limited to the following steps: stacking in sequence a positive electrode plate, a separator, and a negative electrode plate, followed by operations such as winding and folding as needed to obtain an electrode assembly of a winding structure, putting the electrode assembly into a packaging bag, injecting an electrolyte into the packaging bag, and then sealing the packaging bag to obtain an electrochemical apparatus; or stacking in sequence a positive electrode plate, a separator, and a negative electrode plate, fastening four corners of an entire stacking structure with a tape to obtain an electrode assembly of a stacking structure, putting the electrode assembly into a packaging bag, injecting an electrolyte into the packaging bag, and then sealing the packaging bag to obtain an electrochemical apparatus. In addition, an overcurrent prevention element, a guide plate, and the like may also be placed in the packaging bag as needed, so as to prevent pressure rise, overcharge, and over-discharge in the electrochemical apparatus.

A second aspect of this application provides an electronic apparatus, including the electrochemical apparatus according to any embodiment of this application. The electrochemical apparatus provided in this application has good rate performance and cycling performance, so that the electronic apparatus provided in this application has long service life.

The electronic apparatus in this application is not particularly limited, and the electronic apparatus may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a

portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

This application provides an electrochemical apparatus, including a positive electrode plate, where the positive electrode plate includes a positive electrode material layer, the positive electrode material layer includes a positive electrode active material, and in a cross-sectional scanning electron microscope image of the positive electrode material layer, a minimum circumscribed circle radius of the profile of a positive electrode active material particle with a cross-sectional area greater than 5 $\mu m^2$ is $R_c$, and a maximum inscribed circle radius of the profile of the particle with a cross-sectional area greater than 5 $\mu m^2$ is $R_i$, satisfying 1 < average value of $R_c/R_i \leq 3$. According to the electrochemical apparatus provided in this application, the positive electrode active material in the positive electrode material layer satisfies 1 < average value of $R_c/R_i \leq 3$, so that transmission efficiency of lithium ions of the positive electrode plate can be effectively increased, thereby improving rate performance of the electrochemical apparatus at room temperature and low temperature.

## BRIEF DESCRIPTION OF DRAWINGS

To describe the technical solutions in the embodiments of this application and the prior art more clearly, the following briefly describes the accompanying drawings required for describing the embodiments and the prior art. Apparently, the accompanying drawings in the following description show merely some embodiments of this application.

FIG. 1 is a cross-sectional scanning electron microscope image of a positive electrode material layer according to an embodiment of this application; and
FIG. 2 is a schematic cross-sectional diagram of a positive electrode plate according to an embodiment of this application.

Reference signs: 10. positive electrode current collector, 20. positive electrode material layer, and 21. positive electrode active material.

## DESCRIPTION OF EMBODIMENTS

To make the objectives, technical solutions, and advantages of this application more comprehensible, the following describes this application in detail with reference to accompanying drawings and embodiments. Apparently, the described embodiments are merely some rather than all of the embodiments of this application. All other embodiments obtained by persons of ordinary skill in the art based on the embodiments of this application shall fall within the protection scope of this application.

FIG. 1 is a cross-sectional scanning electron microscope image of a positive electrode material layer according to an embodiment of this application. It can be seen from the figure that particles of a positive electrode active material 21 are different in size and shape. A minimum circumscribed circle of the profile of a particle C is R1, and a maximum inscribed circle of the profile of the particle C is R2; and a minimum circumscribed circle of the profile of a particle D is R3, and a maximum inscribed circle of the profile of the particle D is R4. The particle C is an example of a first particle in this application, and the particle D is an example of a second particle in this application.

FIG. 2 is a schematic cross-sectional diagram of a positive electrode plate according to an embodiment of this application. A positive electrode material layer 20 is present on each of two surfaces of a positive electrode current collector 10, a direction indicated by arrows in the figure is a thickness direction of the positive electrode material layer 20, and a cross section of the positive electrode material layer in this application is obtained by cutting transversely along the direction indicated by the arrows in the figure.

It should be noted that, in the specific embodiments of this application, an average value of $R_{c1}/R_{i1}$ of the first particle and an average value of $R_{c2}/R_{i2}$ of the second particle may be controlled by controlling a ratio of a minimum circumscribed circle radius to a maximum inscribed circle radius of the profile of a particle of a raw material and $D_v50$ of the raw material, and comprehensively adjusting conditions such as a stirring speed and roasting temperature in a preparation process of the positive electrode active material.

It should be noted that, in the specific embodiments of this application, an example in which a lithium-ion battery is used as an electrochemical apparatus is used to illustrate this application. However, the electrochemical apparatus in this application is not limited to the lithium-ion battery.

### Examples

The following describes the implementations of this application more specifically by using examples and

comparative examples. Various tests and evaluations were performed according to the following methods. In addition, unless otherwise specified, "part" and "%" are based on weight.

**Test method and device:**

Measurement of $R_i$ and $R_c$

At 25°C, lithium-ion batteries were charged to 4.2 V at a constant current of 0.5C, then charged to 0.05C at a constant voltage of 4.2 V, and discharged to 2.8 V at a constant current of 1C. The lithium-ion batteries were disassembled, and positive electrode plates were washed by using DMC, followed by drying at 60°C for 2 h. An ion polisher was used to cut the positive electrode plates along a thickness direction of the positive electrode plates to obtain flat cross sections of the positive electrode plates, and a scanning electron microscope (SEM) was used to test the cross sections, with SEM images with a magnification of 1000 selected.

Software Image J was used to identify profiles in the SEM images, 100 particles with a cross section entirely in the field of view of the images and with a cross-sectional area greater than 5 $\mu m^2$ were randomly selected, and a maximum inscribed circle radius $R_i$ and a minimum circumscribed circle radius $R_c$ of the particles were calculated respectively by using an algorithm (refer to "Kenneth C. Williams, Wei Chen, Sebastian Weeger, Timothy J. Donohue, Particle shape characterization and its application to discrete element modeling, Particuology, Volume 12, 2014, Pages 80-89, ISSN 1674-2001").

Measurement methods of $R_{c1}$, $R_{i1}$, $R_{c2}$, and $R_{i2}$ were the same as that of $R_i$ and $R_c$.

For measurement of $R_{c3}$ and $R_{i3}$, manganese dioxide was prepared into a slurry, the slurry was applied onto a substrate to prepare a film layer, and measurement was performed with reference to the measurement method of $R_i$ and $R_c$. A solid content of the slurry (for example, 75wt%) and a type of the substrate were not particularly limited, provided that the objectives of this application can be achieved. For measurement of $R_{c4}$ and $R_{i4}$ as well as $R_{c5}$ and $R_{i5}$, refer to the measurement method of $R_{c3}$ and $R_{i3}$.

**Area measurement of first particle and second particle and calculation of area percentages thereof:**

Software Image J was used to calculate particle areas. Whether the particles were first particles or second particles was determined based on identified values of $R_c/R_i$, and a sum of the first particles or the second particles was denoted as an area of the first particle or the second particle. An area percentage of the first particles was area of first particles/area of image $\times$ 100%, and an area percentage of the second particles was area of second particles/area of image $\times$ 100%.

**Measurement of particle size of positive electrode active material:**

A Malvern particle size tester was used to measure particle sizes of positive electrode active materials. The positive electrode active materials were dispersed in ethanol, subjected to ultrasound for 30 min, and then put into the Malvern particle size tester for testing. $D_v10$ of the positive electrode active material is a particle size of the positive electrode active material where the cumulative distribution by volume reaches 10% as counted from the small particle size side, $D_v50$ of the positive electrode active material is a particle size of the positive electrode active material where the cumulative distribution by volume reaches 50% as counted from the small particle size side, and $D_v90$ of the positive electrode active material is a particle size of the positive electrode active material where the cumulative distribution by volume reaches 90% as counted from the small particle size side.

**Element percentage test:**

According to the obtained cross-sectional SEM images of the positive electrode plates, the second particles were determined based on the particle sizes and areas in the images, and then an energy dispersive spectroscopy (EDS) was used for testing to determine doping elements and element percentages.

Positive electrode material layers of the positive electrode plates washed by using the DMC were scraped off by using a scraper, and dissolved by a mixed solvent (for example, a mixed solvent of 10 mL aqua regia (nitric acid and hydrochloric acid were mixed at a volume ratio of 1:1) and 2 mL HF was used for 0.4 g positive electrode active material) to dilute to a volume of 100 mL, and an inductively coupled plasma (ICP) analyzer was used to measure the percentages of the elements in the solutions.

**Compacted density test for positive electrode plate:**

At 25°C, the lithium-ion batteries were charged to 4.2 V at a constant current of 0.5C, then charged to 0.05C at a constant voltage of 4.2 V, and discharged to 2.8 V at a constant current of 1C. The lithium-ion batteries were disassembled, and the positive electrode plates were washed by using the DMC, followed by drying at 60°C for 2 h. Five positive electrode plates with a size of 5 cm × 5 cm were cut, and thickness of the positive electrode plates was measured by using a micrometer and denoted as d0 cm; positive electrode material layers of the positive electrode plates were scraped off by using a scraper, and mass of the positive electrode material layers was weighed by using a balance and denoted as m g; and thickness of positive electrode current collectors with the positive electrode material layers removed was measured by using the micrometer and denoted as d cm. Compacted density of the positive electrode material layers was calculated according to the following formula:

$$\text{compacted density } P = m/[25 \times (d0 - d)],$$

measured in g/cm$^3$.

The compacted density of the positive electrode material layers was an average value of the compacted density of the positive electrode material layers of the five positive electrode plates obtained by cutting.

**Test for particle sizes in positive electrode material layer:**

At 25°C, the lithium-ion batteries were charged to 4.2 V at a constant current of 0.5C, then charged to 0.05C at a constant voltage of 4.2 V, and discharged to 2.8 V at a constant current of 1C. The lithium-ion batteries were disassembled, the disassembled positive electrode plates or negative electrode plates were sintered into powder in vacuum at 400°C, and a particle size analyzer was used to measure particle sizes, to obtain values of $D_v10$, $D_v50$, and $D_v90$.

$D_v90$ is a particle size where the cumulative distribution by volume reaches 90% as counted from the small particle size side, $D_v50$ is a particle size where the cumulative distribution by volume reaches 50% as counted from the small particle size side, and $D_v10$ is a particle size where the cumulative distribution by volume reaches 10% as counted from the small particle size side.

**Test for rate performance and cycling performance at 25°C:**

(1) Rate performance at 2C at room temperature of 25°C and cycling performance at 25°C

At 25°C, the lithium-ion batteries were charged to 4.2 V at a constant current of 0.5C, then charged to 0.05C at a constant voltage of 4.2 V, and discharged to 2.8 V at a constant current of 0.2C, and discharge capacity was recorded as $D_{01}$; and the lithium-ion batteries were charged to 4.2 V at a constant current of 0.5C, then charged to 0.05C at a constant voltage of 4.2 V, and discharged to 2.8 V at a constant current of 2C, and discharge capacity was recorded as $D_1$. Retention rate (%) at 2C at 25°C = $D_1$/ $D_{01}$ × 100%.

Multiple cycling processes of "0.5C charge-2C discharge" were performed for the lithium-ion batteries according to the foregoing operation steps, and after 1000 cycles, discharge capacity after 1000 cycles was measured and recorded as $D_{10}$ Capacity retention rate (%) after 1000 cycles at 25°C = $D_{10}D_{01}$ × 100%.

(2) Rate performance at 1C at low temperature of -10°C

At 25°C, the lithium-ion batteries were charged to 4.2 V at a constant current of 0.5C, then charged to 0.05C at a constant voltage of 4.2 V, and discharged to 2.8 V at a constant current of 1C, and discharge capacity was recorded as $D_{02}$; and at 25°C, the lithium-ion batteries were charged to 4.2 V at a constant current of 0.5C, then charged to 0.05C at a constant voltage of 4.2 V, with battery cells left standing for 30 min at a temperature adjusted to -10°C, and discharged to 2.8 V at a constant current of 1C, and discharge capacity was recorded as $D_2$. Retention rate (%) at 1C at -10°C = $D_2$/ $D_{02}$ × 100%.

**Cycling performance test:**

Capacity retention rate after 500 cycles at 40°C

At 40°C, the lithium-ion batteries were charged to 4.2 V at a constant current of 0.5C, then charged to 0.05C at a constant voltage, left standing for 5 min, and discharged to 2.8 V at a constant current of 1C. This was one charge and

discharge cycle, and discharge capacity was recorded as $D_{03}$. The lithium-ion batteries were subject to 500 cycles according to the foregoing operation steps, and discharge capacity after 500 cycles was measured and recorded as $D_3$. Capacity retention rate (%) after 500 cycles at 40°C = $D_3/D_{03} \times 100\%$.

**Test for percentage of manganese on negative electrode plate:**

The lithium-ion batteries in a fully discharged state after 500 cycles at 40°C were disassembled, and negative electrode plates were washed by using the DMC, followed by drying at 60°C for 2 h. Negative electrode material layers of the negative electrode plates were scraped off by using the scraper, and dissolved by a mixed solvent (for example, 10 mL aqua regia (nitric acid and hydrochloric acid were mixed at a volume ratio of 1:1) was used for 0.4 g negative electrode active material) to dilute to a volume of 100 mL, and the ICP analyzer was used to measure percentages of element manganese in the solutions.

**Example 1-1**

<Preparation of positive electrode plate>

203.3 kg of lithium carbonate (a mass percentage of element lithium was 18.71%), 1000 kg of manganese dioxide with an average value of $R_{c3}/R_{i3}$ being 2.9 and $D_v50$ being 17.2 μm (a mass percentage of element Mn was 60.22%), and 56.2 kg of metal element M2-containing compound aluminum oxide ($Al_2O_3$, where a mass percentage of element aluminum was 52.91%) were weighted and mixed in a high-speed mixer at a rotation speed of 300 r/min for 20 min to obtain a mixture. The mixture was put into an air kiln, heated to 790°C at a rate of 5°C/min and held for 24 h, taken out after natural cooling, and sieved with a 300-mesh sieve to obtain a manganese-containing composite metal oxide, that is, LMO. $R_{c3}$ was a minimum circumscribed circle radius of the profile of a manganese dioxide particle, and $R_{i3}$ was a maximum inscribed circle radius of the profile of the manganese dioxide particle.

A positive electrode active material LMO, a conductive agent Super P, and a binder polyvinylidene fluoride were mixed at a mass ratio of 96:2.4:1.6, and added into N-methylpyrrolidone (NMP). The mixture was stirred to a uniform system by using a vacuum stirrer to obtain a positive electrode slurry. A solid content of the positive electrode slurry was 75wt%. The positive electrode slurry was uniformly applied onto one surface of a positive electrode current collector aluminum foil with thickness of 10 μm, and the aluminum foil was dried at 85°C to obtain a positive electrode plate with one surface coated with a positive electrode material layer with coating thickness of 110 μm. The foregoing steps were repeated on the other surface of the aluminum foil to obtain a positive electrode plate with two surfaces coated with positive electrode material layers. After cold pressing, cutting, and slitting, the positive electrode plate was dried in vacuum at 85°C for 4 h to obtain a positive electrode plate with a size of 74 mm × 867 mm. An average value of $R_c/R_i$ of the positive electrode active material was 2.9, and $D_v50$ of the positive electrode active material was 17.9 μm.

<Preparation of negative electrode plate>

A negative electrode active material artificial graphite, a conductive agent Super P, a thickener sodium carboxymethyl cellulose (CMC), and a binder styrene butadiene rubber (SBR) were mixed at a mass ratio of 96.4:1.5:0.5:1.6 and added into deionized water. The mixture was stirred by using a vacuum stirrer to obtain a negative electrode slurry. A solid content of the negative electrode slurry was 70wt%. The negative electrode slurry was uniformly applied onto one surface of a negative electrode current collector copper foil with thickness of 10 μm, and the copper foil was dried at 85°C to obtain a negative electrode plate with one surface coated with a negative electrode material layer with coating thickness of 130 μm. The foregoing steps were repeated on the other surface of the aluminum foil to obtain a negative electrode plate with two surfaces coated with negative electrode material layers. After cold pressing, cutting, and slitting, the negative electrode plate was dried in vacuum at 120°C for 12 h to obtain a negative electrode plate with a size of 79 mm × 972 mm.

<Preparation of electrolyte>

In an argon atmosphere glove box with a water content less than 10 ppm, linear carbonate DEC and cyclic carbonate EC were mixed at a mass ratio of 57.5:30 to obtain a base solvent, and then a lithium salt $LiPF_6$ was added into the base solvent for dissolution. The mixture was uniformly mixed. Based on mass of an electrolyte, a mass percentage of $LiPF_6$ was 12.5%, and the remaining was the base solvent.

<Preparation of separator>

Water-borne polyvinylidene fluoride, aluminum oxide, and polypropylene were mixed at a mass ratio of 1:8:1, and added into deionized water. The mixture was stirred to obtain a coating layer slurry with a solid content of 50wt%. The coating layer slurry was uniformly applied onto one surface of a 5 μm-thick PE film (provided by Celgard), and the PE film was dried at 85°C to obtain a separator with one surface coated with a 5 μm-thick coating layer. The foregoing steps were repeated on the other surface of the separator to obtain a separator with two surfaces coated with coating layers. A separator was obtained after drying and cold pressing. A porosity of the separator was 39%.

<Preparation of lithium-ion battery>

The positive electrode plate, the separator, and the negative electrode plate prepared above were stacked in sequence, so that the separator was located between the positive electrode plate and the negative electrode plate for isolation, and the resulting stack was wound to obtain an electrode assembly. The electrode assembly was put into an aluminum-plastic film packaging bag and dried, and the electrolyte was injected, followed by processes such as vacuum packaging, standing, formation, degassing, and trimming to obtain a lithium-ion battery. A formation condition was being charged to 3.3 V at a constant current of 0.02C and then charged to 3.6 V at a constant current of 0.1C.

**Examples 1-2 to 1-4**

Examples 1-2 to 1-4 were the same as Example 1-1 except that the average values of $R_{c3}/R_{i3}$ and $D_v50$ of the manganese dioxide were adjusted so that the average values of $R_c/R_i$ and $D_v50$ of the positive electrode active materials were as shown in Table 1.

**Examples 1-5 and 1-6**

Examples 1-5 and 1-6 were the same as Example 1-1 except that the manganese dioxide in the raw material was replaced with trimanganese tetroxide and the average values of $R_{c4}/R_{i4}$ and $D_v50$ of the trimanganese tetroxide were adjusted in preparation of LMO so that the average values of $R_c/R_i$ and $D_v50$ of the positive electrode active materials were as shown in Table 1. $R_{c4}$ is a minimum circumscribed circle radius of the profile of a trimanganese tetroxide particle, and $R_{i4}$ is a maximum inscribed circle radius of the profile of the trimanganese tetroxide particle.

**Example 2-1**

Example 2-1 was the same as Example 1-1 except that in <Preparation of positive electrode plate>, a positive electrode active material LMO, a positive electrode active material $LiNi_{0.55}Co_{0.15}Mn_{0.3}O_2$(NCM5515), a conductive agent Super P, and a binder polyvinylidene fluoride were mixed at a mass ratio of 76.8:19.2:2.4:1.6 and added into NMP, the mixture was stirred to a uniform system by using a vacuum stirrer to obtain a positive electrode slurry with a solid content of 75wt%, and the average value of $R_{c3}/R_{i3}$ and $D_v50$ of the manganese dioxide were adjusted so that the average value of $R_c/R_i$ of the second particle and $D_v50$ of the positive electrode active material were as shown in Table 2.

The NCM5515 was prepared by using the following methods: lithium carbonate (a mass percentage of element lithium was 18.71%) and $Ni_{0.55}Co_{0.15}Mn_{0.3}(OH)_2$ precursor with an average value of $R_{c5}/R_{i5}$ being 1.2 and $D_v50$ being 16.3 μm were mixed at a ratio of moles of Li to moles of transition metal elements (the sum of moles of Ni, Co, and Mn) of 1.05:0.997 in a high-speed mixer at a rotation speed of 300 r/min for 20 min to obtain a mixture. The mixture was put into an air kiln, heated to 890°C at a rate of 5°C/min and held for 12 h, taken out after natural cooling, and sieved with a 300-mesh sieve to obtain lithium nickel cobalt manganate, that is, NCM5515. $R_{c5}$ is a minimum circumscribed circle radius of the profile of a $Ni_{0.55}Co_{0.15}Mn_{0.3}(OH)_2$ precursor particle, and $R_{i5}$ is a maximum inscribed circle radius of the profile of the $Ni_{0.55}Co_{0.15}Mn_{0.3}(OH)_2$ precursor particle.

**Examples 2-2 to 2-4 and Example 2-7**

Examples 2-2 to 2-4 and Example 2-7 were the same as Example 2-1 except that the corresponding positive electrode active materials were mixed, and the average values of $R_{c3}/R_{i3}$ and $D_v50$ of the manganese dioxide and/or the average values of $R_{c5}/R_{i5}$ and $D_v50$ of the $Ni_{0.55}Co_{0.15}Mn_{0.3}(OH)_2$ precursor were adjusted according to Table 2 so that the average values of $R_{c1}/R_{i1}$, the average values of $R_{c2}/R_{i2}$, the area percentages of the first particles, the area percentages of the second particles, $D_v50$ of the positive electrode active materials, and the particle size distribution $(D_v90 - D_v10)/D_v50$ of the positive electrode active materials were as shown in Table 2. In Table 2, NCM6010 was $LiNi_{0.6}Co_{0.1}Mn_{0.3}O_2$, NCM8309 was $LiNi_{0.83}Co_{0.09}Mn_{0.08}O_2$, and the ratio of moles of Li to moles of the transition metal elements in preparation

of NCM5515 was adjusted so that NCM6010 and NCM8309 satisfied the foregoing chemical formulas.

**Examples 2-5 and 2-6**

Examples 2-5 and 2-6 were the same as Example 2-1 except that the manganese dioxide in the raw material was replaced with trimanganese tetroxide and the average values of $R_{c4}/R_{i4}$ and $D_v50$ of the trimanganese tetroxide were adjusted in preparation of the first particles LMO, and the average values of $R_{c3}/R_{i3}$ and $D_v50$ of the manganese dioxide were adjusted in preparation of the second particles LMO so that the average values of $R_{c1}/R_{i1}$, the average values of $R_{c2}/R_{i2}$, the area percentages of the first particles, the area percentages of the second particles, $D_v50$ of the positive electrode active materials, and the particle size distribution $(D_v90 - D_v10)/D_v50$ of the positive electrode active materials were as shown in Table 2.

**Examples 3-1 to 3-7**

Examples 3-1 to 3-7 were the same as Example 2-1 except that the types and percentages of the linear carbonate and cyclic carbonate were adjusted according to Table 3 to obtain the base solvents.

**Examples 4-1 to 4-9**

Examples 4-1 to 4-9 were the same as Example 2-1 except that the sulfonate compounds were further added into the electrolytes in <Preparation of electrolyte>, and the types and mass percentages of the sulfonate compounds were adjusted according to Table 4.

**Examples 5-1 to 5-6**

Examples 5-1 to 5-6 were the same as Example 2-1 except that the metal element M2-containing compounds were added and the percentages of the compounds were adjusted according to Table 5 in preparation of LMO so that the mass percentages of metal element M2 were as shown in Table 5.

**Example 5-7**

Example 5-7 was the same as Example 5-3 except that NCM5515 was replaced with commercially available $LiFePO_4$ (recorded as LFP) with $D_v50$ being 1.0 μm.

**Example 5-8**

Example 5-8 was the same as Example 5-3 except that NCM5515 was replaced with commercially available $LiMn_{0.75}Fe_{0.25}PO_4$ (recorded as LMFP) with $D_v50$ being 1.0 μm.

**Example 5-9**

Example 5-9 was the same as Example 5-3 except that part of NCM5515 was replaced with commercially available LFP with $D_v50$ being 1.0 μm so that a mass ratio of LMO to NCM5515 to LFP to Super P to polyvinylidene fluoride was 76.8:9.2:10:2.4:1.6.

**Comparative Example 1**

Comparative Example 1 was the same as Example 1-1 except that the average value of $R_c/R_i$ and $D_v50$ of the positive electrode active material were as shown in Table 1.

Preparation parameters and performance tests of the examples and comparative examples are shown in Tables 1 to 5.

**Table 1**

| | Positive electrode active material | Average value of $R_c/R_i$ | $D_v50$ of positive electrode active material (μm) | Retention rate at 1C at -10°C (%) | Retention rate at 2C at 25°C (%) |
|---|---|---|---|---|---|
| Example 1-1 | LMO | 2.9 | 17.9 | 75.2 | 97.5 |

(continued)

| | Positive electrode active material | Average value of $R_c/R_i$ | $D_v50$ of positive electrode active material (μm) | Retention rate at 1C at -10°C (%) | Retention rate at 2C at 25°C (%) |
|---|---|---|---|---|---|
| Example 1-2 | LMO | 2.5 | 18.1 | 76.5 | 97.7 |
| Example 1-3 | LMO | 2.3 | 18.0 | 77.5 | 97.8 |
| Example 1-4 | LMO | 1.8 | 17.9 | 79.2 | 98.1 |
| Example 1-5 | LMO | 1.5 | 17.8 | 79.3 | 98.3 |
| Example 1-6 | LMO | 1.3 | 12.6 | 79.2 | 98.2 |
| Comparative Example 1 | LMO | 3.5 | 18.2 | 65.3 | 90.0 |

It can be seen from Examples 1-1 to 1-6 and Comparative Example 1 that when the values of $R_c/R_i$ were within the range of this application, the obtained lithium-ion batteries had good rate performance at both low temperature and room temperature.

**Table 2**

| | First particle | | | Second particle | | | $D_v50$ of positive electrode active material (μm) | $(D_v90 - D_v10)/D_v50$ of positive electrode active material | Retention rate at 1C at low temperature of −10°C (%) | Retention rate at 2C at 25°C (%) | Capacity retention rate after 1000 cycles at 2C at 25°C (%) |
|---|---|---|---|---|---|---|---|---|---|---|---|
| | Material type | Average value of $R_{c1}/R_{i1}$ | Area percentage (%) | Material type | Average value of $R_{c2}/R_{i2}$ | Area percentage B (%) | | | | | |
| Example 2-1 | NCM5515 | 1.2 | 15.9 | LMO | 1.7 | 68.5 | 15.2 | 1.5 | 75.5 | 96.6 | 72.1 |
| Example 2-2 | NCM5515 | 1.2 | 15.9 | LMO | 2.2 | 68.6 | 17.2 | 1.4 | 75.0 | 96.2 | 71.8 |
| Example 2-3 | NCM5515 | 1.2 | 16.1 | LMO | 2.9 | 69.8 | 18.3 | 1.3 | 74.3 | 95.7 | 70.3 |
| Example 2-4 | NCM6010 | 1.2 | 10.2 | LMO | 1.7 | 68.6 | 14.3 | 1.6 | 75.8 | 96.7 | 70.6 |
| Example 2-5 | LMO | 1.5 | 15.8 | LMO | 2.9 | 70.4 | 17.9 | 1.6 | 74.6 | 96.0 | 57.8 |
| Example 2-6 | LMO | 1.3 | 46.2 | LMO | 1.7 | 33.5 | 11.3 | 1.8 | 75.0 | 95.9 | 63.9 |
| Example 2-7 | NCM8309 | 1.1 | 5.3 | LMO | 1.7 | 79.7 | 16.5 | 1.7 | 77.5 | 97.0 | 68.5 |

An area percentage of first particles, an area percentage of second particles, and values of $D_v50$ and $(D_v90 - D_v10)/D_v50$ of a positive electrode active material generally affect performance of a lithium-ion battery. It can be seen from Examples 2-1 to 2-7 that when the area percentages of the first particles, the area percentages of the second particles, and the values of $D_v50$ and $(D_v90 - D_v10)/D_v50$ of the positive electrode active materials were within the ranges of this application, the obtained lithium-ion batteries had good rate performance at low temperature and room temperature.

**Table 3**

| | Linear carbonate | | | Cyclic carbonate | | | $\omega_1/\omega_2$ | Average value of $R_c/R_i$ | Retention rate at 1C at low temperature of −10°C (%) |
|---|---|---|---|---|---|---|---|---|---|
| | Type | Mass percentage (%) | Total percentage $\omega_1$ (%) | Type | Mass percentage (%) | Total percentage $\omega_2$ (%) | | | |
| Example 2-1 | DEC | 57.5 | 57.5 | EC | 30 | 30 | 1.92 | 1.5 | 75.5 |
| Example 3-1 | DEC + EMC | 30 + 27.5 | 57.5 | EC + PC | 15 + 15 | 30 | 1.92 | 1.5 | 73.5 |
| Example 3-2 | DEC + EMC + DBC | 30 + 20 + 7.5 | 57.5 | EC + PC + BC | 10 + 10 + 10 | 30 | 1.92 | 1.5 | 74.2 |
| Example 3-3 | DEC + EMC | 30 + 32.5 | 62.5 | EC + PC | 20 + 5 | 25 | 2.5 | 1.5 | 74.5 |
| Example 3-4 | DEC + EMC | 30 + 30 | 60 | EC + PC | 22.5 + 5 | 27.5 | 2.18 | 1.5 | 75.0 |
| Example 3-5 | DEC + EMC | 30 + 20 | 50 | EC + PC | 30 + 7.5 | 37.5 | 1.53 | 1.5 | 75.5 |
| Example 3-6 | DEC + EMC | 30 + 15 | 45 | EC + PC | 35 + 7.5 | 42.5 | 1.06 | 1.5 | 71.2 |
| Example 3-7 | DEC + EMC | 30 + 7.5 | 37.5 | EC + PC | 42.5 + 7.5 | 50 | 0.75 | 1.5 | 69.8 |

Types and mass percentages of linear carbonate and cyclic carbonate in an electrolyte and a value of $\omega_1/\omega_2$ generally affect performance of a lithium-ion battery. It can be seen from Examples 2-1 and 3-1 to 3-7 that when the types and mass percentages of the linear carbonate and cyclic carbonate and the values of $\omega_1/\omega_2$ were within the ranges of this application, the obtained lithium-ion batteries had good rate performance at low temperature.

**Table 4**

| | Sulfonate compound | Mass percentage A of sulfonate compound (%) | Area percentage B of second particles (%) | A/B | Capacity retention rate after 500 cycles at 45°C (%) | Percentage of manganese on negative electrode plate after cycling at 40°C (%) |
|---|---|---|---|---|---|---|
| Example 2-1 | / | / | 68.5 | / | 64.0 | 0.155 |
| Example 4-1 | I-5 | 1.2 | 68.6 | 0.017 | 65.3 | 0.121 |
| Example 4-2 | I-5 | 6.5 | 68.7 | 0.095 | 70.7 | 0.098 |
| Example 4-3 | I-5 | 10 | 68.9 | 0.145 | 66.7 | 0.102 |
| Example 4-4 | I-1 | 3.1 | 68.5 | 0.045 | 71.6 | 0.096 |
| Example 4-5 | I-2 | 3.1 | 68.6 | 0.045 | 71.7 | 0.094 |
| Example 4-6 | I-8 | 3.1 | 68.5 | 0.045 | 71.4 | 0.098 |
| Example 4-7 | I-10 | 3.1 | 68.4 | 0.045 | 71.3 | 0.097 |
| Example 4-8 | I-5 + I-9 | 3.1 | 68.6 | 0.045 | 72.0 | 0.092 |
| Example 4-9 | I-5 + I-9 + I-14 | 3.1 | 68.5 | 0.045 | 72.1 | 0.092 |

Note: "/" in Table 4 means that a corresponding preparation parameter or material does not exist.

It can be seen from Examples 2-1 and 4-1 to 4-9 that after the sulfonate compounds were into the electrolytes, cycling performance of the lithium-ion batteries at high temperature could be improved and dissolution of manganese on the negative electrode plates could be reduced. It can be seen from Examples 4-1 to 4-9 that when the types and mass percentages of the sulfonate compounds were within the ranges of this application, the obtained lithium-ion batteries had good cycling performance at high temperature, with only small amounts of manganese dissolved from the negative electrode plates. In addition, when the values of A/B were within the range of this application, the obtained lithium-ion batteries had good cycling performance at high temperature, with only small amounts of manganese dissolved from the negative electrode plates.

Table 5

| | Positive electrode active material | Metal element M1 | Metal element M2-containing compound | Metal element M2 in second particles | Mass percentage of metal element M2 (%) | Area percentage B of second particles (%) | Retention rate at 1C at low temperature of −10°C (%) |
|---|---|---|---|---|---|---|---|
| Example 2-1 | NCM5515 + LMO | Ni + Co | $Al_2O_3$ | Al | 1.55 | 68.5 | 75.5 |
| Example 5-1 | NCM5515 + LMO | Ni + Co | $Al_2O_3$ | Al | 1.01 | 68.6 | 72.4 |
| Example 5-2 | NCM5515 + LMO | Ni + Co | $Al_2O_3$ + $Nb_2O_5$ | Al + Nb | 1.01 + 0.45 | 68.5 | 70.5 |
| Example 5-3 | NCM5515 + LMO | Ni + Co | $Al_2O_3$ + MgO + $Nb_2O_5$ | Al + Mg + Nb | 1.02 + 0.12 + 0.45 | 68.4 | 72.5 |
| Example 5-4 | NCM5515 + LMO | Ni + Co | $Al_2O_3$ + MgO + $Nb_2O_5$ | Al + Mg + Nb | 1.53 + 0.12 + 0.44 | 68.4 | 75.4 |
| Example 5-5 | NCM5515 + LMO | Ni + Co | $Al_2O_3$ + MgO + $Nb_2O_5$ | Al + Mg + Nb | 1.52 + 0.48 + 0.65 | 68.5 | 71.2 |
| Example 5-6 | NCM5515 + LMO | Ni + Co | $Al_2O_3$ | Al | 0.1 | 68.4 | 68.5 |
| Example 5-7 | LFP + LMO | Fe | $Al_2O_3$ + MgO + $Nb_2O_5$ | Al + Mg + Nb | 1.01 + 0.13 + 0.44 | 68.5 | 60.5 |
| Example 5-8 | LMFP + LMO | Fe | $Al_2O_3$ + MgO + $Nb_2O_5$ | Al + Mg + Nb | 1.02 + 0.13 + 0.45 | 68.7 | 58.5 |
| Example 5-9 | NCM5515 + LFP + LMO | Ni + Co + Fe | $Al_2O_3$ + MgO + $Nb_2O_5$ | Al + Mg + Nb | 1.02 + 0.14 + 0.44 | 68.6 | 71.3 |

Types of elements in a positive electrode active material generally affect performance of a lithium-ion battery. It can be seen from Examples 2-1 and 5-1 to 5-9 that when the positive electrode active materials included Mn and metal element M1, the obtained lithium-ion batteries had good rate performance at low temperature. In addition, it can also be seen that when the second particles included metal element M2 and the types and mass percentages of metal element M2 were within the ranges of this application, the obtained lithium-ion batteries had good rate performance at low temperature.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus, comprising a positive electrode plate, wherein the positive electrode plate comprises a positive electrode material layer, the positive electrode material layer comprises a positive electrode active material, and in a cross-sectional scanning electron microscope image of the positive electrode material layer, a minimum circumscribed circle radius of the profile of a positive electrode active material particle with an area greater than 5 $\mu m^2$

is $R_c$, and a maximum inscribed circle radius of the profile of the positive electrode active material particle with an area greater than 5 $\mu m^2$ is $R_i$, satisfying 1 < average value of $R_c/R_i \leq 3$.

**2.** The electrochemical apparatus according to claim 1, wherein the positive electrode active material particles with an area greater than 5 $\mu m^2$ comprise first particles and second particles, a minimum circumscribed circle radius of the profile of the first particle is $R_{c1}$, and a maximum inscribed circle radius of the profile of the first particle is $R_{i1}$, satisfying 1 < average value of $R_{c1}/R_{i1} \leq 1.5$; and a minimum circumscribed circle radius of the profile of the second particle is $R_{c2}$, and a maximum inscribed circle radius of the profile of the second particle is $R_{i2}$, satisfying 1.5 < average value of $R_{c2}/R_{i2} \leq 3$.

**3.** The electrochemical apparatus according to claim 2, wherein it holds true that:

based on a cross-sectional area of the positive electrode material layer, an area percentage of the first particles is greater than 0% and less than or equal to 50%, and an area percentage B of the second particles ranges from 30% to 80%; and/or
an average cross-sectional area of the first particles is less than an average cross-sectional area of the second particles.

**4.** The electrochemical apparatus according to claim 1, further comprising an electrolyte, wherein the electrolyte comprises linear carbonate and cyclic carbonate, and based on mass of the electrolyte, a mass percentage of the linear carbonate is $\omega_1$, and a mass percentage $\omega_2$ of the cyclic carbonate ranges from 25% to 50%, satisfying that $\omega_1/\omega_2$ ranges from 0.75 to 2.5.

**5.** The electrochemical apparatus according to claim 1, wherein the electrochemical apparatus satisfies at least one of conditions (a) or (b):

(a) the positive electrode active material comprises lithium manganate; or
(b) the positive electrode active material comprises a composite metal oxide of element lithium and transition metal elements, wherein the transition metal elements comprise Mn and metal element M1, and metal element M1 comprises at least one of Ni, Co, or Fe.

**6.** The electrochemical apparatus according to claim 2, wherein the second particles comprise metal element M2, and metal element M2 comprises at least one of Al, Mg, or Nb.

**7.** The electrochemical apparatus according to claim 2, wherein the second particles comprise metal element M2, and based on mass of the second particles, a mass percentage of metal element M2 ranges from 0.1% to 3%.

**8.** The electrochemical apparatus according to claim 1, wherein particle size distribution by volume of the positive electrode active material satisfies at least one of conditions (c) or (d):

(c) 9 $\mu m \leq Dv50 \leq 22$ $\mu m$; or
(d) $0.9 \leq (Dv90 - Dv10)/Dv50 \leq 2$.

**9.** The electrochemical apparatus according to claim 4, wherein the linear carbonate comprises at least one of dimethyl carbonate, diethyl carbonate, ethyl methyl carbonate, ethyl propyl carbonate, dipropyl carbonate, methyl isopropyl carbonate, methyl butyl carbonate, or dibutyl carbonate.

**10.** The electrochemical apparatus according to claim 4, wherein the cyclic carbonate comprises at least one of ethylene carbonate, propylene carbonate, or butylene carbonate.

**11.** The electrochemical apparatus according to claim 3, further comprising an electrolyte, wherein the electrolyte comprises a sulfonate compound, and based on mass of the electrolyte, a mass percentage of the sulfonate compound is A, satisfying $0.006 \leq A/B \leq 0.1$.

**12.** The electrochemical apparatus according to claim 11, wherein $0.5\% \leq A \leq 10\%$.

**13.** The electrochemical apparatus according to claim 11, wherein the sulfonate compound comprises at least one of the following structural compounds I-1 to I-14:

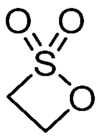
I-1

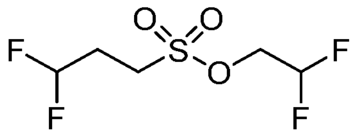
I-2

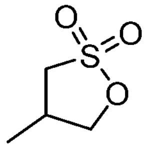
I-3

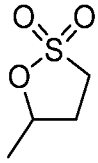
I-4

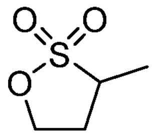
I-5

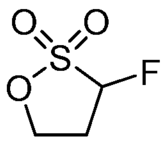
I-6

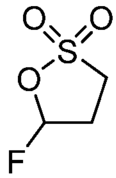
I-7

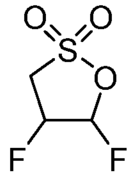
I-8

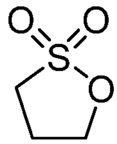
I-9

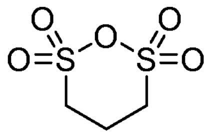
I-10

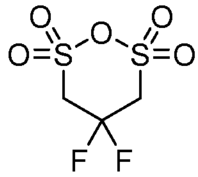
I-11

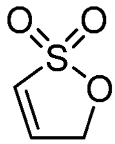
I-12

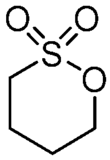
I-13

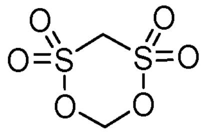
I-14

**14.** The electrochemical apparatus according to claim 1, further comprising a negative electrode plate, wherein the negative electrode plate comprises a negative electrode material layer, the negative electrode material layer comprises a negative electrode active material, and the negative electrode active material comprises at least one of artificial graphite, natural graphite, or hard carbon.

**15.** An electronic apparatus, comprising the electrochemical apparatus according to any one of claims 1 to 14.

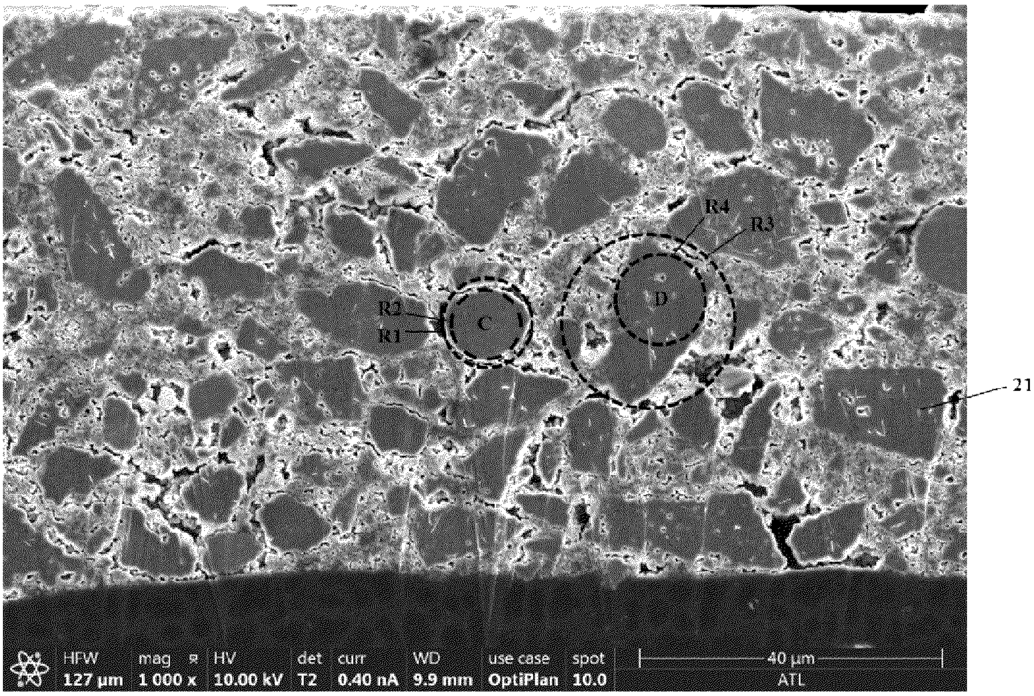
R4
R3
R2
R1
C
D
21
HFW 127 µm
mag 1 000 x
HV 10.00 kV
det T2
curr 0.40 nA
WD 9.9 mm
use case OptiPlan
spot 10.0
40 µm
ATL

FIG. 1

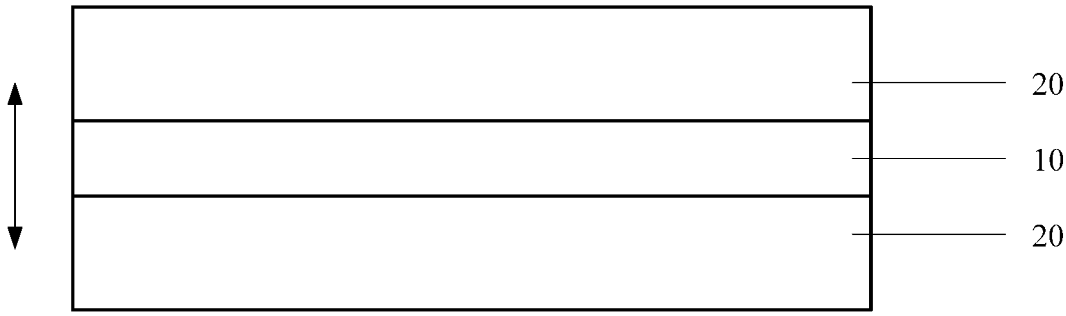
20
10
20

FIG. 2

## INTERNATIONAL SEARCH REPORT

International application No.
**PCT/CN2021/138349**

**A. CLASSIFICATION OF SUBJECT MATTER**

H01M 4/131(2010.01)i；H01M 4/50(2010.01)i；H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 内切, 内接, 外切, 外接, 圆, 面积, 截面, 粒子, 颗粒, 直径, 半径, 正极, 阴极, 电极, inscribed, circumscribed, circum, circle, area, section, particle, diameter, radius, positive, cathode, electrode

**C. DOCUMENTS CONSIDERED TO BE RELEVANT**

| Category* | Citation of document, with indication, where appropriate, of the relevant passages | Relevant to claim No. |
|---|---|---|
| A | JP 2015056384 A (JX NIPPON MINING & METALS CORP.) 23 March 2015 (2015-03-23)<br>entire document | 1-15 |
| A | CN 110447129 A (PANASONIC INTELLECTUAL PROPERTY MANAGEMENT CO., LTD.) 12 November 2019 (2019-11-12)<br>entire document | 1-15 |
| A | US 2021167366 A1 (CONTEMPORARY AMPEREX TECHNOLOGY CO., LTD.) 03 June 2021 (2021-06-03)<br>entire document | 1-15 |
| A | JP 2020155334 A (TOYOTA MOTOR CORP. et al.) 24 September 2020 (2020-09-24)<br>entire document | 1-15 |
| A | WO 2018029745 A1 (TORAY INDUSTRIES, INC.) 15 February 2018 (2018-02-15)<br>entire document | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 August 2022** | **31 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/138349**

| Patent document cited in search report | | | Publication date (day/month/year) | Patent family member(s) | | | Publication date (day/month/year) |
|---|---|---|---|---|---|---|---|
| JP | 2015056384 | A | 23 March 2015 | JP | 6273115 | B2 | 31 January 2018 |
| CN | 110447129 | A | 12 November 2019 | US | 2020020951 | A1 | 16 January 2020 |
| | | | | JP | WO2018179899 | A1 | 06 February 2020 |
| | | | | WO | 2018179899 | A1 | 04 October 2018 |
| | | | | JP | 6872726 | B2 | 19 May 2021 |
| US | 2021167366 | A1 | 03 June 2021 | WO | 2021108945 | A1 | 10 June 2021 |
| | | | | US | 11121362 | B2 | 14 September 2021 |
| | | | | CN | 114556614 | A | 27 May 2022 |
| JP | 2020155334 | A | 24 September 2020 | | None | | |
| WO | 2018029745 | A1 | 15 February 2018 | | None | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KENNETH C. WILLIAMS** ; **WEI CHEN** ; **SEBASTIAN WEEGER** ; **TIMOTHY J. DONOHUE**. Particle shape characterization and its application to discrete element modeling. *Particuology*, 2014, vol. 12, ISSN 1674-2001, 80-89